(19) 

Europäisches
Patentamt
European
Patent Office
Office européen
des brevets

(11) **EP 4 350 567 A1**

(12) **EUROPEAN PATENT APPLICATION**
published in accordance with Art. 153(4) EPC

(43) Date of publication:
**10.04.2024 Bulletin 2024/15**

(21) Application number: **22816126.1**

(22) Date of filing: **31.05.2022**

(51) International Patent Classification (IPC):
***G06F 30/23*** (2020.01)      ***G06F 113/22*** (2020.01)
***G06F 113/26*** (2020.01)

(52) Cooperative Patent Classification (CPC):
**G06F 30/23;** G06F 2113/22; G06F 2113/26

(86) International application number:
**PCT/JP2022/022190**

(87) International publication number:
**WO 2022/255380 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2021 JP 2021093399**

(71) Applicants:
• **Toyobo Co., Ltd.
Kita-ku
Osaka-shi, Osaka 530-0001 (JP)**
• **National Institute of Maritime, Port and Aviation
Technology
Mitaka-shi, Tokyo 181-0004 (JP)**
• **Toray Engineering Co., Ltd.
Tokyo 103-0028 (JP)**
• **Toray Engineering D Solutions Co., Ltd.
Tokyo 103-0028 (JP)**

(72) Inventors:
• **ITAKURA, Daisuke
Otsu-shi, Shiga 520-0292 (JP)**
• **FURUICHI, Kenji
Otsu-shi, Shiga 520-0292 (JP)**
• **ISHIHARA, Ryoichi
Otsu-shi, Shiga 520-0292 (JP)**
• **UCHIDA, Yoshihiro
Otsu-shi, Shiga 520-0292 (JP)**
• **MATSUO, Tsuyoshi
Mitaka-shi, Tokyo 181-0004 (JP)**
• **SAWADA, Satoshi
Otsu-shi, Shiga 520-2141 (JP)**
• **HYAKUSAI, Akira
Otsu-shi, Shiga 520-2141 (JP)**

(74) Representative: **Vossius & Partner
Patentanwälte Rechtsanwälte mbB
Siebertstrasse 3
81675 München (DE)**

(54) **MOLDING ANALYSIS METHOD, PROGRAM, AND RECORDING MEDIUM**

(57)    A molding analysis method of the present disclosure is a method for performing molding analysis of a plate-like intermediate base material containing a resin and a reinforcing material when the plate-like intermediate base material is molded using a mold, the molding analysis method including applying a model having anisotropy between an out-of-plane direction and an in-plane direction orthogonal to the out-of-plane direction as a model of the intermediate base material, and calculating viscosity distribution in a cross-section direction of a molded article using each viscosity in accordance with a flow field, and the viscosity distribution indicates that under a boundary condition that there is no slip flow of the intermediate base material on a wall surface of the mold, as a result of a shear field occurring in the vicinity of the wall surface, a low viscosity layer that is more affected by an out-of-plane shear viscosity than a central portion of the intermediate base material is automatically formed in the vicinity of the wall surface, and the intermediate base material in the vicinity of the wall surface functions as a lubricating layer.

EP 4 350 567 A1

**(Cont. next page)**

FIG.11

**(a)** VISCOSITY(Pa*sec),FLOW
TIME=29.71sec FILLING=0.21

| | |
|---|---|
| 11000.00 | |
| 10833.33 | |
| 10666.67 | |
| 10500.00 | |
| 10333.33 | |
| 10166.67 | |
| 10000.00 | |
| 9833.33 | |
| 9666.67 | |
| 9500.00 | |
| 9333.33 | |
| 9166.67 | |
| 9000.00 | |

ISOTROPIC
MATERIAL

$\eta \perp = \eta // = \eta \, s = 1E+04Pa \cdot s$

ON ELEMENT

**(b)** VISCOSITY(Pa*sec),FLOW
TIME=33.62sec FILLING=0.22

| | |
|---|---|
| 9999970 | |
| 9172468 | |
| 8344966 | |
| 7517464 | |
| 6689962 | |
| 5862460 | |
| 5034958 | |
| 4207456 | |
| 3379953 | |
| 2552451 | |
| 1724949 | |
| 897447 | |
| 69945 | |

ON ELEMENT

TRANSVERSELY
ISOTROPIC MATERIAL

$\eta \perp = \eta // = 1E+07Pa \cdot s$,
$\eta \, s = 1E+04Pa \cdot s$

AREA WITH LOW VISCOSITY

**Description**

TECHNICAL FIELD

The present invention relates to a molding analysis method, a program for causing a computer to execute the molding analysis method, and a recording medium recording the program. In particular, the present invention relates to a molding analysis method of a composite material containing a resin and a reinforcing material.

BACKGROUND ART

A composite material containing a resin and a reinforcing material is known. Such a composite material is typically processed to a product having a predetermined shape by molding.

In molding of the composite material, there are various conditions such as temperatures of a mold and a base material, periods of pressure keeping and cooling, speed and load when the base material is compressed, arrangement of the base material within the mold and a thickness of the base material. It costs considerable time and money to repeat experiments to find optimal conditions. It has been therefore proposed to analyze flow of a resin when the composite material is molded through computer simulation.

For example, US Patent Application Publication No. 2019/0232535 (PTL 1) discloses obtaining a pattern of flow of a resin upon molding through computer-aided engineering (CAE) using a modified Lipscomb equation.

CITATION LIST

PATENT LITERATURE

PTL 1: US Patent Application Publication No. 2019/0232535

SUMMARY OF INVENTION

TECHNICAL PROBLEM

In fiber-reinforced plastic that is one of composite materials, fibers included in a resin have directionality. In a case where fibers are randomly oriented within the resin, the fiber-reinforced plastic exhibits isotropy in a plane where fibers are oriented. In molding of such fiber-reinforced plastic, flow in an in-plane direction of the fiber-oriented plane and flow in an out-of-plane direction of the fiber-oriented plane respectively exhibit different behaviors. Thus, molding analysis of the composite material having anisotropy in the out-of-plane direction requires a model in which the anisotropy is taken into account.

However, a model preferable for molding analysis of a certain material is not necessarily also preferable for molding analysis of another material. Thus, to evaluate flow upon molding of the composite material having out-of-plane anisotropy with high accuracy, molding analysis using a model that is more widely applicable (that is, versatile) is desired.

An object of the present invention is to provide a technique for analyzing flow upon molding of a composite material having anisotropy between an out-of-plane direction and an in-plane direction with higher accuracy.

SOLUTION TO PROBLEM

A molding analysis method according to one aspect of the present invention is a method for performing molding analysis of a plate-like intermediate base material containing a resin and a reinforcing material when the intermediate base material is molded using a mold. The molding analysis method includes applying a model having anisotropy between an out-of-plane direction and an in-plane direction orthogonal to the out-of-plane direction as a model of the intermediate base material, and calculating viscosity distribution in a cross-section direction of a molded article using each viscosity in accordance with a flow field. The viscosity distribution indicates that under a boundary condition that there is no slip flow of the intermediate base material on a wall surface of the mold, as a result of a shear field occurring in the vicinity of the wall surface, a low viscosity layer that is more affected by an out-of-plane shear viscosity than a central portion of the intermediate base material is automatically formed in the vicinity of the wall surface, and the intermediate base material in the vicinity of the wall surface functions as a lubricating layer.

According to this configuration, it is possible to obtain viscosity distribution in a cross-section direction of the composite material after molding. In particular, it is possible to obtain an evaluation result that the lubricating layer is automatically formed in the vicinity of the wall surface of the mold, which cannot be obtained in analysis in related art. Thus, according to this configuration, it is possible to perform molding analysis of a composite material having anisotropy between an out-of-plane direction and an in-plane direction with high accuracy.

In the above-described configuration, the molding analysis method includes making a flow velocity in the vicinity of the wall surface of the mold come closer to a flow velocity at a central portion of the molded article as a viscosity ratio indicating intensity of anisotropy increases, wherein distribution of the flow velocity becomes closer to uniform in a thickness direction of the molded article.

According to this configuration, it is possible to obtain flow velocity distribution in a thickness direction of the molded article with high accuracy.

In the above-described configuration, the molding analysis method includes calculating an average viscosity that is an isotropic viscosity by applying a weighting function that depends on a flow field to viscosities in the in-plane direction and the out-of-plane direction of the model.

According to this configuration, by appropriately selecting the weighting function, it is possible to appropriately express a deformed state of the intermediate base material in each of the out-of-plane direction and the in-plane direction. It is therefore possible to perform molding analysis of the intermediate base material with high accuracy. Note that the weighting function can be arbitrarily selected.

In the above-described configuration, the weighting function is a function obtained on the basis of orthogonal tensor decomposition of strain rate tensor regarding deformation of the model.

According to this configuration, an appropriate weighting function is selected, so that molding analysis of the intermediate base material can be performed with high accuracy.

In the above-described configuration, the flow field is out-of-plane compression, in-plane compression, isotropic compression, out-of-plane shear and in-plane shear.

According to this configuration, the above-described flow field is taken into account as a deformed state of the model having anisotropy between the out-of-plane direction and the in-plane direction. This makes it possible to perform molding analysis of the intermediate base material with high accuracy.

In the above-described configuration, the viscosity in the in-plane direction of the model is an in-plane viscosity, and the viscosity in the out-of-plane direction of the model includes an out-of-plane normal shear viscosity and an out-of-plane shear viscosity.

According to this configuration, by weighting the in-plane viscosity, the out-of-plane normal shear viscosity and the out-of-plane shear viscosity, it is possible to express a deformed state of the model having anisotropy between the out-of-plane direction and the in-plane direction. It is therefore possible to perform molding analysis of the intermediate base material with high accuracy.

In the above-described configuration, the intermediate base material is fiber-reinforced plastic using a fiber as the reinforcing material.

According to this configuration, it is possible to perform molding analysis of the fiber-reinforced plastic with high accuracy.

A program according to one aspect of the present invention is a program for causing a computer to execute the molding analysis method according to any one of the above.

A recording medium according to one aspect of the present invention is a computer readable recording medium recording the above-described program.

ADVANTAGEOUS EFFECTS OF INVENTION

According to the present invention, it is possible to analyze flow upon molding of a composite material having anisotropy between an out-of-plane direction and an in-plane direction with higher accuracy.

BRIEF DESCRIPTION OF DRAWINGS

Fig. 1 is a view illustrating deformed states of a substance having in-plane isotropy.
Fig. 2 is a view schematically explaining an intermediate base material to be analyzed and a manufacturing method of the intermediate base material according to the present embodiment.
Fig. 3 is a flowchart indicating an example of a manufacturing method of a CTT material.
Fig. 4 is a flowchart indicating a molding method according to the present embodiment.
Fig. 5 is a view illustrating an example of a configuration that can implement a molding analysis method according to the present embodiment.
Fig. 6 is a block diagram illustrating a hardware configuration example of an analysis device illustrated in Fig. 5.
Fig. 7 is a view illustrating an example of functional blocks of the analysis device illustrated in Fig. 5.
Fig. 8 is a schematic plan view of an experimental material.

Fig. 9 is a schematic view of a molding experiment.

Fig. 10 is a view illustrating an analysis model created by a computer to simulate a molding experiment illustrated in Fig. 8 and Fig. 9.

Fig. 11 is a view indicating compression analysis results using the model illustrated in Fig. 10 and is a view indicating results of studying a certain viscosity that does not depend on a shear rate for an isotropic material and a transversely isotropic material.

Fig. 12 is a view indicating compression analysis results using the model illustrated in Fig. 10 and is a view indicating an example of application of simulation to a CTT material (viscosity distribution in a cross-section direction of a material).

Fig. 13 is a view indicating analysis results of flow velocity distribution corresponding to the viscosity distribution indicated in Fig. 11.

Fig. 14 is a view indicating analysis results of flow velocity distribution corresponding to the viscosity distribution indicated in Fig. 12.

Fig. 15 is a view indicating an experimental result and a simulation result regarding a compression test for the CTT material.

DESCRIPTION OF EMBODIMENT

An embodiment of the present invention will be described in detail with reference to the drawings. Note that the same or corresponding portions in the drawings are denoted by the same reference numerals, and redundant description thereof will not be repeated.

<1. Outline>

A typical example of a composite material having out-of-plane anisotropy is fiber-reinforced plastic. In an embodiment of the present invention, a chopped carbon fiber tape reinforced thermoplastics (CTT) material that is a carbon fiber reinforced composite material is exemplified.

The chopped carbon fiber tape reinforced thermoplastics (CTT) material is an intermediate base material in which resin-impregnated carbon fiber tapes are laminated. By laminating the carbon fiber tapes so that fibers are randomly oriented, the CTT material is manufactured. Thus, the CTT material has isotropy in a plane where fibers are oriented. On the other hand, the CTT material has anisotropy in an out-of-plane direction of the tapes, that is, in a direction in which tapes are laminated.

In molding of the CTT material, flow in a direction in which chopped tapes are oriented (in-plane direction) and flow in a direction in which the chopped tapes are laminated (out-of-plane direction) exhibit different behaviors. Thus, in molding analysis of the CTT material, it is necessary to construct a model in which anisotropy is taken into account. Further, stress to be generated is different between in a lamination direction of the CTT material and a direction perpendicular to the lamination direction, and thus, in molding analysis of the CTT material, it is necessary to perform analysis in which anisotropy of stress tensor is taken into account.

In the embodiment of the present invention, a model in which anisotropy of stress is indirectly taken into account using scalar quantity derived from stress tensor of anisotropy, specifically, using an equivalent viscosity, is used. Specifically, in the embodiment of the present invention, generalized stress tensor is introduced to calculate an average viscosity obtained by applying weight in accordance with a flow field. As application of weight in accordance with the flow field, arbitrary weighting can be applied. In one embodiment of the present invention, weighting based on orthogonal tensor decomposition is used.

<2. Derivation of generalized stress tensor>

(1) Basis tensor

[Formula 1]

Definition of basis tensor

It is assumed that orientation of a material is expressed using an orthogonal coordinate system $(t_1, t_2, n)$. If only $n = (n_x, n_y, n_z)^T$ is obtained, a way of selection of $t_1$ and $t_2$ is not unique but can be expressed as in expression (2-1).

$$\mathbf{t}_1 = \begin{pmatrix} \cos\theta\cos\phi & \cos\theta\sin\phi & -\sin\theta \end{pmatrix}^{\mathrm{T}}$$

$$\mathbf{t}_2 = \begin{pmatrix} -\sin\phi & \cos\phi & 0 \end{pmatrix}^{\mathrm{T}}$$

$$\mathbf{n} = \begin{pmatrix} \sin\theta\cos\phi & \sin\theta\sin\phi & \cos\theta \end{pmatrix}^{\mathrm{T}} \tag{2-1}$$

$$\theta = \arctan\frac{n_z}{\sqrt{n_x^2 + n_y^2}}, \quad \phi = \arctan\frac{n_y}{n_x}$$

where $\quad$ In this event, if a rotation matrix R= $(t_1, t_2, n)^{\mathrm{T}}$ is used, a unit vector n in a lamination direction can be expressed with expression (2-2).

$$\mathbf{n} = \mathbf{R}^{\mathrm{T}} \begin{pmatrix} 0 \\ 0 \\ 1 \end{pmatrix} \tag{2-2}$$

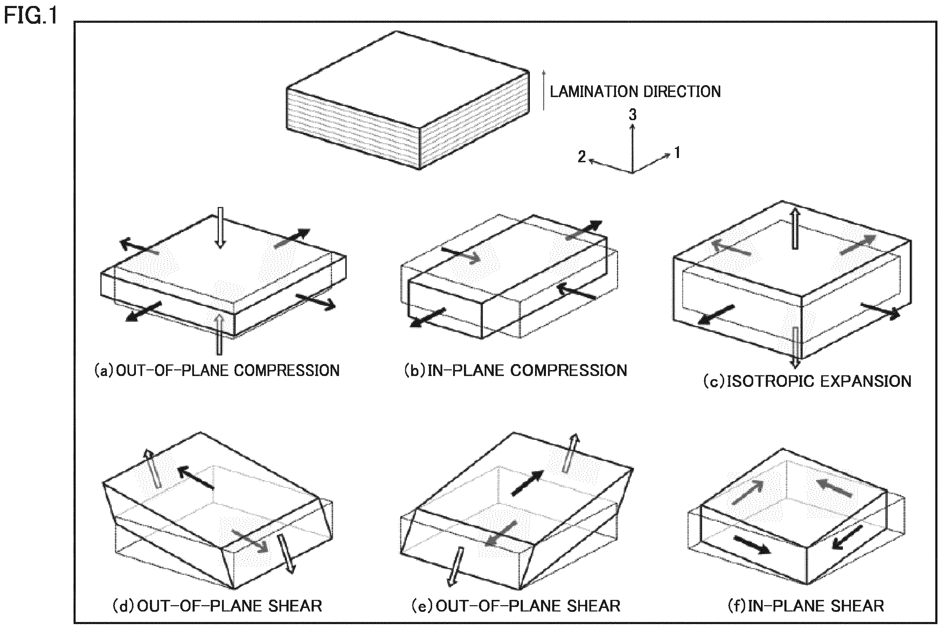

Fig. 1 is a view illustrating deformed states of a substance having in-plane isotropy. Note that as a substance having in-plane isotropy, a laminated body will be considered. As illustrated in Figs. 1(a) to 1(f), there are six types of deformed states of the substance having in-plane isotropy, that is, (a) out-of-plane compression, (b) in-plane compression, (c) isotropic expansion, (d) and (e) out-of-plane shear, and (f) in-plane shear.

Fig. 1 indicates three directions orthogonal to one another with arrows with reference numerals from "1 to "3". "Direction 1" and a direction (direction 2) perpendicular to direction 1 are set in an in-plane direction of the substance having in-plane isotropy, and a lamination direction of the substance (that is, an out-of-plane direction) is set as "direction 3".

A basis of symmetric tensor for the substance having in-plane isotropy can be expressed with expressions (2-3) to (2-8). Reference numerals (a) to (f) assigned ahead of the respective expressions respectively correspond to the reference numerals (a) to (f) indicated in Fig. 1. In expressions (2-3) to (2-8), R is a rotation matrix expressed as R = $(t_1, t_2, n)^{\mathrm{T}}$ in a case where orientation of the substance is expressed using the orthogonal coordinate system $(t_1, t_2, n)$.

Suffixes "1" to "3" to be used in expressions which will be described below are suffixes that respectively mean directions "1" to "3" illustrated in Fig. 1. Further, "⊥" means an out-of-plane direction, and "||" means an in-plane direction.

[Formula 2]

Tensor represents $\hat{\mathbf{E}}_{\perp}$: out-of-plane compression (Fig. 1(a)), $\hat{\mathbf{E}}_{\parallel}$ : in-plane compression (Fig. 1(b)), $\hat{\mathbf{I}}$: isotropic expansion (Fig. 1(c)), $\hat{\mathbf{G}}_1$ and $\hat{\mathbf{G}}_2$: out-of-plane shear (Fig. 1(d), Fig. 1(e)), and $\hat{\mathbf{G}}_3$: in-plane shear (Fig. 1(f)).

(a)

$$\hat{\mathbf{E}}_{\perp} = \mathbf{R}^{\mathrm{T}} \frac{1}{\sqrt{3}} \begin{pmatrix} 1 & 0 & 0 \\ 0 & 1 & 0 \\ 0 & 0 & -2 \end{pmatrix} \mathbf{R} \tag{2-3}$$

(b)

$$\hat{\mathbf{E}}_{\parallel} = \mathbf{R}^{\mathrm{T}} \begin{pmatrix} 1 & 0 & 0 \\ 0 & -1 & 0 \\ 0 & 0 & 0 \end{pmatrix} \mathbf{R} \tag{2-4}$$

(c)

$$\hat{\mathbf{I}} = \mathbf{R}^{\mathrm{T}} \sqrt{\frac{2}{3}} \begin{pmatrix} 1 & 0 & 0 \\ 0 & 1 & 0 \\ 0 & 0 & 1 \end{pmatrix} \mathbf{R} = \sqrt{\frac{2}{3}} \mathbf{I} \tag{2-5}$$

(d)

$$\hat{\mathbf{G}}_1 = \mathbf{R}^{\mathrm{T}} \begin{pmatrix} 0 & 0 & 0 \\ 0 & 0 & 1 \\ 0 & 1 & 0 \end{pmatrix} \mathbf{R} \tag{2-6}$$

(e)

$$\hat{\mathbf{G}}_2 = \mathbf{R}^{\mathrm{T}} \begin{pmatrix} 0 & 0 & 1 \\ 0 & 0 & 0 \\ 1 & 0 & 0 \end{pmatrix} \mathbf{R} \tag{2-7}$$

(f)

$$\hat{\mathbf{G}}_3 = \mathbf{R}^{\mathrm{T}} \begin{pmatrix} 0 & 1 & 0 \\ 1 & 0 & 0 \\ 0 & 0 & 0 \end{pmatrix} \mathbf{R} \tag{2-8}$$

"Direction 3" illustrated in Fig. 1 is a lamination direction, and thus, a unit vector n in the lamination direction is provided by expression (2-9). In this event, R = I.
[Formula 3]

$$\mathbf{n} = \begin{pmatrix} 0 \\ 0 \\ 1 \end{pmatrix} \tag{2-9}$$

(2) Strain rate tensor

Strain rate tensor D can be subjected to orthogonal tensor decomposition as expressed in expression (2-11) using a relationship (in which incompressibility is taken into account) of expression (2-10). In expression (2-11), ε with a dot (·) represents a strain rate.
[Formula 4]

$$\mathrm{tr}\mathbf{D} = \mathbf{D} : \mathbf{I} = 0 \tag{2-10}$$

$$\mathbf{D} = \dot{\varepsilon}_\perp \hat{\mathbf{E}}_\perp + \dot{\varepsilon}_\parallel \hat{\mathbf{E}}_\parallel + \dot{\varepsilon}_1 \hat{\mathbf{G}}_1 + \dot{\varepsilon}_2 \hat{\mathbf{G}}_2 + \dot{\varepsilon}_3 \hat{\mathbf{G}}_3 \tag{2-11}$$

As expressed with expression (2-12), each strain rate is expressed by an inner product of basis tensor and strain rate tensor.
[Formula 5]

$$\dot{\varepsilon}_\perp = \frac{1}{2}\hat{\mathbf{E}}_\perp : \mathbf{D}, \quad \dot{\varepsilon}_\parallel = \frac{1}{2}\hat{\mathbf{E}}_\parallel : \mathbf{D}, \quad \dot{\varepsilon}_1 = \frac{1}{2}\hat{\mathbf{G}}_1 : \mathbf{D}, \quad \dot{\varepsilon}_2 = \frac{1}{2}\hat{\mathbf{G}}_2 : \mathbf{D}, \quad \dot{\varepsilon}_3 = \frac{1}{2}\hat{\mathbf{G}}_3 : \mathbf{D} \quad (2\text{-}12)$$

(3) Equivalent strain rate

An equivalent strain rate is provided by expression (2-13).
[Formula 6]

$$D_{eq}^2 = \frac{1}{2}\mathbf{D} : \mathbf{D} \qquad\qquad (2\text{-}13)$$

(4) Stress tensor

Stress tensor $\sigma$ can be expressed using basis tensor as in the following expression (2-14). Note that viscosity parameters are respectively an out-of-plane normal shear viscosity $\eta\perp$, an in-plane viscosity $\eta_\parallel$, and an out-of-plane shear viscosity $\eta_s$, and p is a hydrostatic pressure.
[Formula 7]

$$\boldsymbol{\sigma} = 2\eta_\perp \dot{\varepsilon}_\perp \mathbf{E}_\perp + 2\eta_\parallel \left( \dot{\varepsilon}_\parallel \mathbf{E}_\parallel + \dot{\varepsilon}_3 \mathbf{G}_3 \right) + 2\eta_s \left( \dot{\varepsilon}_1 \mathbf{G}_1 + \dot{\varepsilon}_2 \mathbf{G}_2 \right) - p\mathbf{I} \qquad (2\text{-}14)$$

Expression (2-14) indicates that stress tensor $\sigma$ is stress tensor in which anisotropy in the out-of-plane direction is taken into account. In the present specification, the stress tensor expressed with expression (2-14) will be referred to as "generalized stress tensor".

<3. Isotropization of viscosity>

An isotropic viscosity is obtained for the generalized stress tensor expressed with expression (2-14). The isotropic viscosity will be also referred to as an "average viscosity" in the present specification.
To change a coefficient of each viscosity parameter and power in accordance with a form of flow, in the present embodiment, a weighting function depending on the flow field will be defined as provided in expression (3-1).
[Formula 8]

$$\phi_\perp = \frac{\dot{\varepsilon}_\perp^2}{D_{eq}^2}, \quad \phi_\parallel = \frac{\dot{\varepsilon}_\parallel^2 + \dot{\varepsilon}_3^2}{D_{eq}^2}, \quad \phi_s = \frac{\dot{\varepsilon}_1^2 + \dot{\varepsilon}_2^2}{D_{eq}^2} \qquad (3\text{-}1)$$

(where $\phi_\perp + \phi_\parallel + \phi_s = 1$, $D_{eq}^2 = \frac{1}{2}\mathbf{D} : \mathbf{D} = \dot{\varepsilon}_1^2 + \dot{\varepsilon}_2^2 + \dot{\varepsilon}_3^2 + \dot{\varepsilon}_\parallel^2 + \dot{\varepsilon}_\perp^2$ )

Using the weighting function depending on the flow field, the isotropic viscosity can be expressed with expression (3-2).
[Formula 9]

$$\eta^{ISO} = \prod_i \left( \eta'^{ISO}(f_i) \right)^{p_i}$$

$$\left( \eta'^{ISO}(f_i) = f_i^{-1}\left( \sum_j \phi_j f_i(\eta_j) \right), \quad \sum_i p_i = 1, \quad i = 1, 2, 3, \cdots, \quad j = \perp, \parallel s \right) \tag{3-2}$$

where $f_i$: arbitrary function, $f_i^{-1}$ : inverse function of $f_i$, $\phi_j$ : weighting function depending on the flow field, and $\eta_j$ : viscosity spectrum.

As described above, in the present embodiment, it is possible to isotropize and express the viscosity by using the generalized stress tensor and the weighting function that changes in accordance with a flow state. The isotropic viscosity (average viscosity) can be expressed in a form of a sum of a viscosity in the in-plane direction (in-plane viscosity) weighted depending on the flow field of the model, and a viscosity in the out-of-plane direction (an out-of-plane normal shear viscosity and an out-of-plane shear viscosity) weighted depending on the flow field of the model.

<4. Molding analysis method>

In the present embodiment, flow upon molding of the composite material having anisotropy between the out-of-plane direction and the in-plane direction can be analyzed by calculating the isotropic viscosity (average viscosity) by a computer.

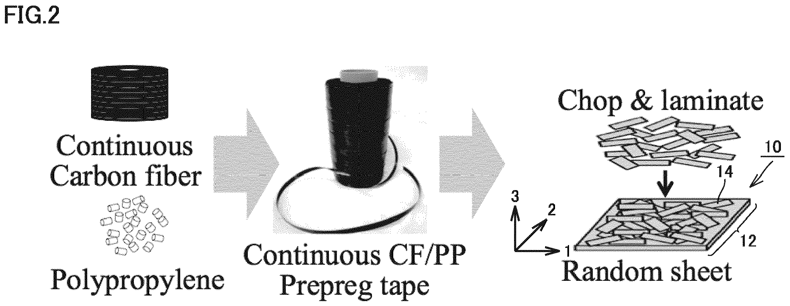

Fig. 2 is a view schematically explaining the intermediate base material to be analyzed and a manufacturing method of the intermediate base material according to the present embodiment. As illustrated in Fig. 2, an intermediate base material 10 contains a resin 12 and fibers 14. Directions indicated with reference numerals "1" to "3" in Fig. 2 respectively correspond to the directions "1" to "3" illustrated in Fig. 1.

Resin 12 may be a thermoplastic resin or a thermosetting resin, or the both may be used. While not limited, specific examples of resin 12 can include a polyolefin resin such as polypropylene, a polyester resin, a polyamide resin, an epoxy resin, an unsaturated polyester resin, a phenol resin, a diallyl phthalate resin, a vinylester resin, a silicon resin, a polyimide resin, and the like.

Examples of fibers 14 can include fibers typically used for fiber-reinforced plastic, for example, carbon fibers, glass fibers, boron fibers, silicon carbide fibers, alumina fibers, silica fibers, aromatic polyamide fibers, and the like.

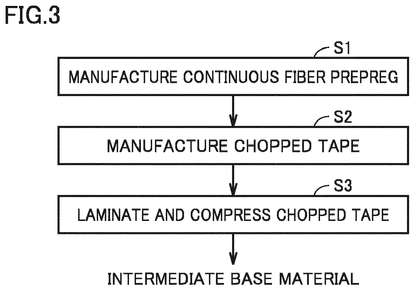

In the present embodiment, a CTT material is used as an example of the intermediate base material. Thus, Fig. 2 and Fig. 3 illustrate an example of a manufacturing method of the CTT material as an example of the manufacturing method of the intermediate base material. An example of the manufacturing method of the CTT material will be described below with reference to Fig. 2 and Fig. 3.

Fig. 3 is a flowchart indicating an example of the manufacturing method of the CTT material. As indicated in Fig. 2 and Fig. 3, first, a continuous fiber prepreg is manufactured (step S1). In step S1, a sheet-like base material (prepreg tape) is manufactured by impregnating a thermoplastic resin (for example, acid-modified polypropylene) with carbon fibers aligned in one direction.

Then, chopped tapes that are discontinuous fiber tapes are manufactured by cutting the prepreg tape into tapes of a predetermined size (step S2). While a size of the chopped tape is not particularly limited, in one example, the chopped tape has a size of, for example, a length of 35 mm, a width of 15 mm and a thickness of 0.1 mm.

Subsequently, a plurality of chopped tapes are laminated. In this event, the plurality of chopped tapes are laminated so that fibers 14 are randomly oriented in the in-plane direction. The laminated plurality of chopped tapes are compressed by application of heat and a pressure (step S3). By this means, the plurality of chopped tapes are integrated, and plate-like intermediate base material 10 is manufactured.

As schematically illustrated in Fig. 2, fibers 14 are randomly oriented in the in-plane direction. By this means, intermediate base material 10 (CTT material) has isotropy in the in-plane direction and anisotropy in the out-of-plane direction. As a result of fibers 14 being oriented in the in-plane direction, flow of intermediate base material 10 exhibits different behaviors between in the in-plane direction and in the out-of-plane direction.

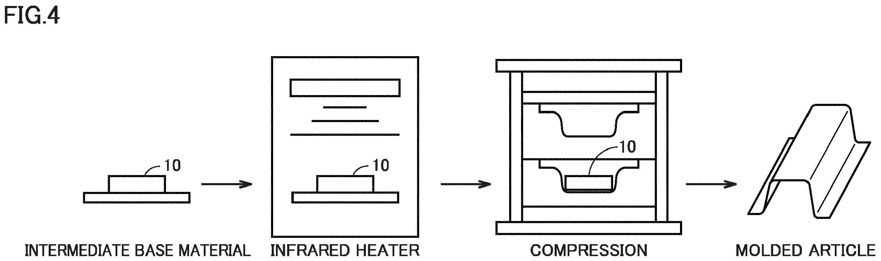

Fig. 4 is a flowchart indicating a molding method according to the present embodiment. As indicated in Fig. 4, intermediate base material 10 is heated by a heating device such as an infrared heater. Then, intermediate base material 10 softened by heat is compressed within a mold. As a result of this, a molded article is manufactured. Note that Fig. 4 indicates stamping molding as an example of the molding method. In the stamping molding, intermediate base material 10 is pressed by a mold for stamping molding to become a molded article having a desired shape.

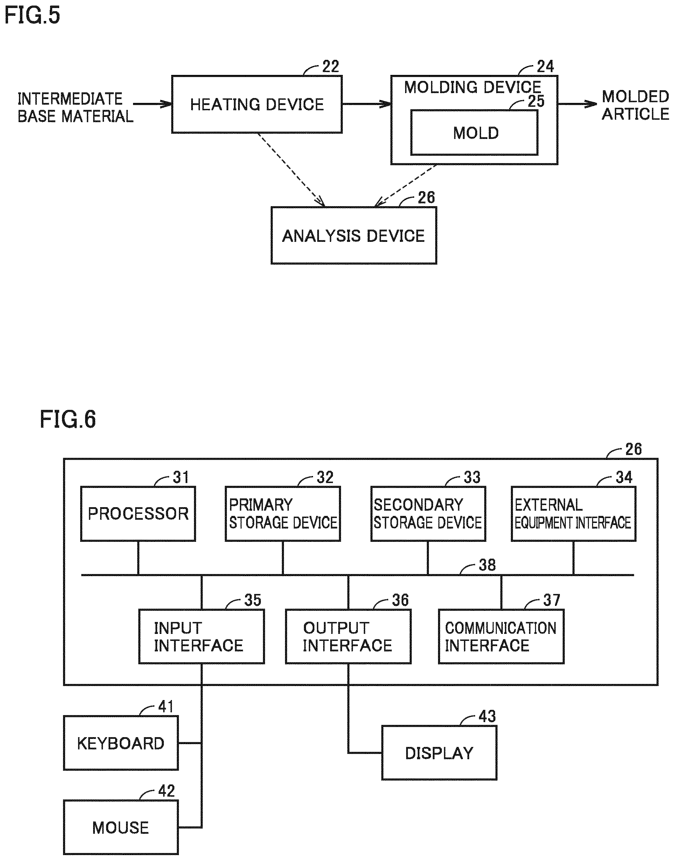

Fig. 5 is a view illustrating an example of a configuration that can implement a molding analysis method according to the present embodiment. As illustrated in Fig. 5, for example, a heating device 22, a molding device 24 and an analysis device 26 may be combined. Heating device 22, which is, for example, an infrared heater illustrated in Fig. 4, heats intermediate base material 10. Molding device 24, which includes a mold 25 (for example, the mold for stamping molding illustrated in Fig. 4), molds intermediate base material 10 softened by heat.

Analysis device 26, which is a device for executing the molding analysis method according to the present embodiment, is implemented by a program being executed by hardware in accordance with a versatile computing architecture. Analysis device 26 performs molding analysis of intermediate base material 10 by executing simulation.

Fig. 6 is a block diagram illustrating a hardware configuration example of the analysis device illustrated in Fig. 5. Analysis device 26 includes a processor 31, a primary storage device 32, a secondary storage device 33, an external equipment interface 34, an input interface 35, an output interface 36, a communication interface 37, and a bus 38. Components such as processor 31 and primary storage device 32 exchange data, signals, and the like, through bus 38.

Processor 31 processes programs and data stored in primary storage device 32. Primary storage device 32 stores the programs to be executed and data to be referred to by processor 31. In one aspect, a dynamic random access memory (DRAM) may be used as primary storage device 32.

Secondary storage device 33 stores programs, data, and the like, in a non-volatile manner. In one aspect, a non-volatile memory such as a hard disk drive (HDD) and a solid state drive (SSD) may be used as secondary storage device 33. Thus, secondary storage device 33 corresponds to a computer readable recording medium recording programs to be executed by a computer.

External equipment interface 34 is used, for example, in a case where external equipment is connected to analysis device 26. External equipment interface 34 is, for example, a universal serial bus (USB) interface.

Input interface 35 is used to connect input devices such as a keyboard 41 and a mouse 42. Input interface 35 accepts user operation and user input through these input devices.

Output interface 36 is, for example, used to connect output devices such as a display 43.

Communication interface 37 is used by analysis device 26 to perform communication with external equipment. For example, communication interface 37 is used when analysis device 26 performs communication via a network. Communication with external equipment may be either wireless communication or wired communication.

Analysis device 26 may include an optical drive as an option. The optical drive reads out a computer readable program stored in a recording medium (for example, an optical recording medium such as a digital versatile disc (DVD)) that transiently stores the program, from the recording medium. The program read out from the recording medium may be installed on secondary storage device 33, or the like. Further, various kinds of programs to be executed at analysis device 26 may be downloaded from a server device, or the like, on a network and may be installed on analysis device 26.

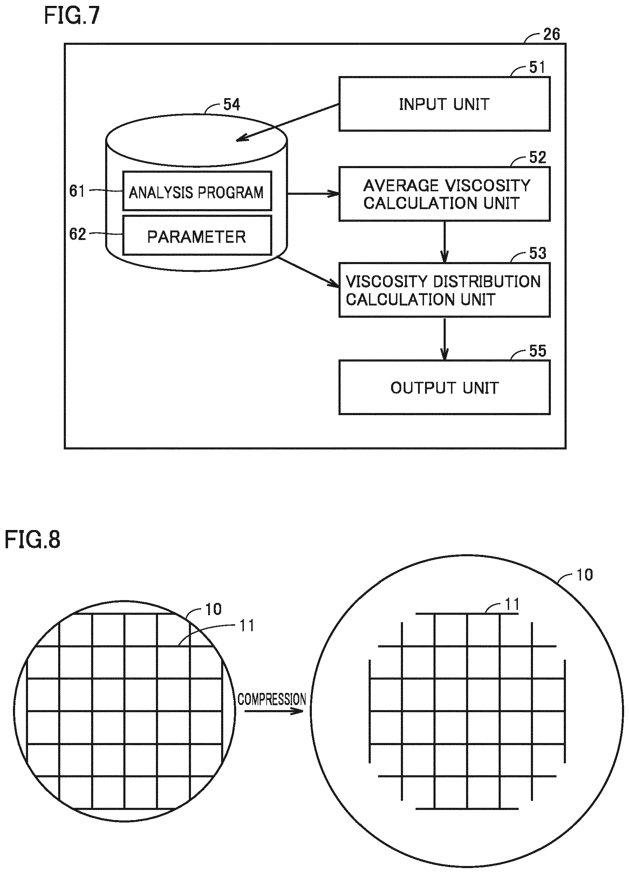

Fig. 7 is a view illustrating an example of functional blocks of the analysis device illustrated in Fig. 5. In one aspect, analysis device 26 as illustrated in Fig. 7 is constituted by the hardware illustrated in Fig. 6 executing software that implements functions of the respective functional blocks. Note that analysis device 26 may further include components other than the components illustrated in Fig. 7.

Referring to Fig. 7, analysis device 26 includes an input unit 51, an average viscosity calculation unit 52, a viscosity distribution calculation unit 53, a storage unit 54, and an output unit 55. Input unit 51 accepts information such as material characteristics of a resin and molding conditions as input. These kinds of information are, for example, characteristic values of a molded article actually obtained by molding the intermediate base material in accordance with predetermined conditions, and the predetermined molding conditions.

Average viscosity calculation unit 52 calculates an average viscosity that is an isotropic viscosity by applying a weighting function depending on a flow field to viscosities in an in-plane direction and in an out-of-plane direction of a model using the model having anisotropy between the out-of-plane direction and the in-plane direction orthogonal to the out-of-plane direction as a model of intermediate base material 10. As the weighting function depending on the flow field, for example, weighting based on orthogonal tensor decomposition is used.

Viscosity distribution calculation unit 53 performs molding analysis on finite elements of a molded article model obtained by modeling an actual molded article in accordance with predetermined molding conditions. Viscosity distribution calculation unit 53 obtains an average viscosity for each finite element of the model. The average viscosity is calculated by average viscosity calculation unit 52. Viscosity distribution calculation unit 53 is a simulation execution unit that performs molding analysis. Average viscosity calculation unit 52 may be included in viscosity distribution calculation unit 53 as part of viscosity distribution calculation unit 53.

Storage unit 54 stores an analysis program 61 for molding analysis, a parameter 62 for molding analysis input to analysis device 26 from a user, and the like. Average viscosity calculation unit 52 and viscosity distribution calculation unit 53 read out analysis program 61 and parameter 62 from storage unit 54, executes molding analysis of the model and calculates an average viscosity for each finite element. By this means, average viscosity calculation unit 52 and viscosity distribution calculation unit 53 calculate viscosity distribution in a cross-section direction of the molded article.

Output unit 55 outputs the viscosity distribution in the cross-section direction of the molded article that is a calculation result of viscosity distribution calculation unit 53, as an analysis result. The analysis result is displayed at, for example, display 43 (see Fig. 6).

<5. Example of molding analysis>

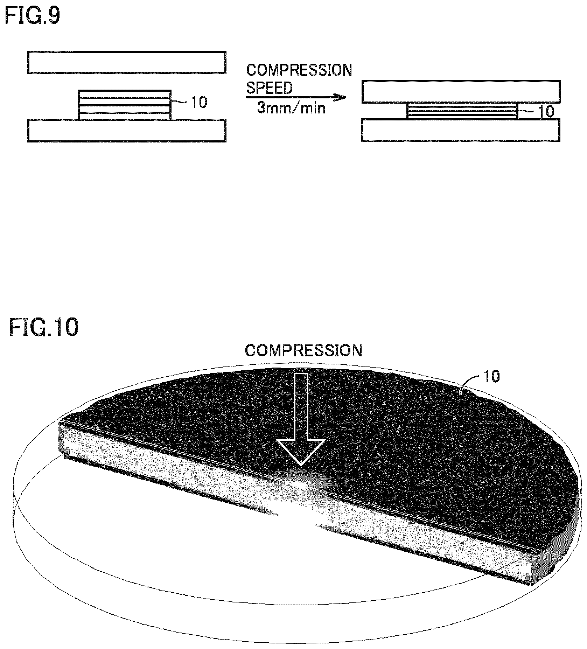

An experiment of molding of the CTT material will be described with reference to Fig. 8 and Fig. 9. Fig. 8 is a schematic plan view of an experimental material. Fig. 9 is a schematic view of a molding experiment. As illustrated in Fig. 8 and Fig. 9, a disc-like CTT material (corresponding to intermediate base material 10) to which a marking offline is provided is compressed under load using a compression test device under a condition that a resin temperature: 220°C, and compression speed: 3 mm/min. Note that to confirm that slip does not occur on a surface that is a wall surface contact portion of the CTT material, a marking off line 11 is formed on the surface of the CTT material, and viscosity characteristics are evaluated from compression load and velocity of compressive displacement. Values obtained in the experiment are input to a computer, and the computer performs molding analysis by executing a program using the input values.

Fig. 10 is a view illustrating an analysis model created by a computer to simulate the molding experiment illustrated in Fig. 8 and Fig. 9. As illustrated in Fig. 10, viscosity distribution in a state where a disc-like reinforced plastic base material is compressed under load is obtained through simulation. While software for executing simulation is not particularly limited, in the present example, analysis software 3D TIMON-CompositePRESS (Toray Engineering D Solutions Co., Ltd., "3D TIMON" and "CompositePRESS" are registered trademarks) is used. In the simulation, an average viscosity for each finite element is calculated. An equivalent strain rate is used as a weighting function for calculating the average viscosity.

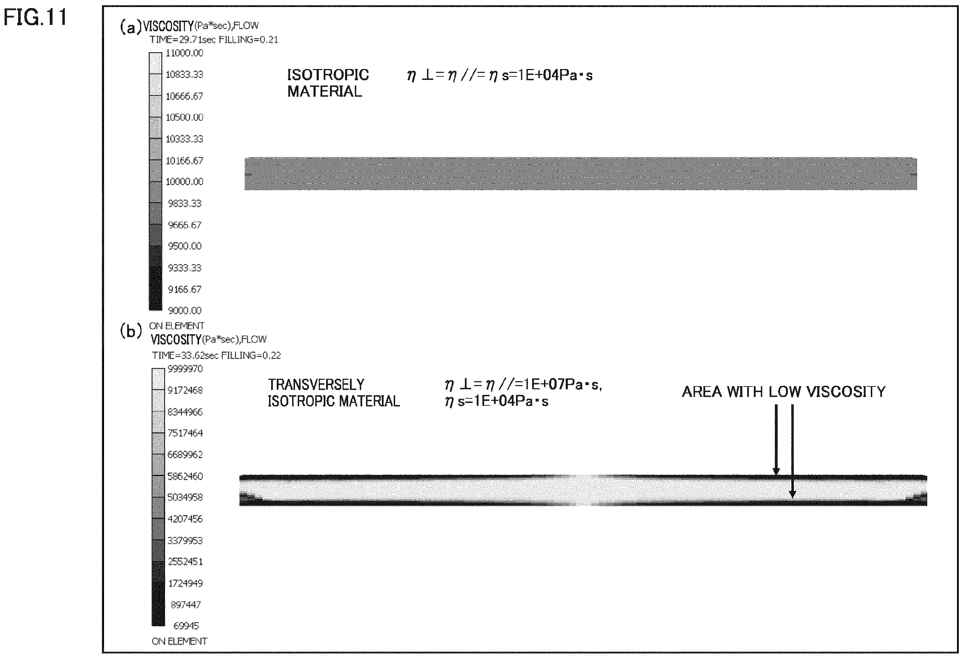

Fig. 11 is a first view indicating compression analysis results using the model illustrated in Fig. 10. As the analysis model, an isotropic material and a transversely isotropic material having anisotropy between the out-of-plane direction and the in-plane direction are used. Note that Fig. 11 is a view indicating results of studying a certain viscosity that does not depend on a shear rate for the isotropic material and the transversely isotropic material. Fig. 11(a) indicates viscosity distribution in a cross-section direction of the isotropic material, and Fig. 1 1(b) indicates viscosity distribution in a cross-section direction of the transversely isotropic material.

For the isotropic material, the out-of-plane normal shear viscosity $\eta_\perp$, the in-plane viscosity $\eta_\parallel$, and the out-of-plane shear viscosity $\eta_s$ are made the same ($\eta_\perp = \eta_\parallel = \eta_s = 1E + 04Pa{\cdot}s$). On the other hand, for the transversely isotropic material, the out-of-plane normal shear viscosity $\eta_\perp$ and the in-plane viscosity $\eta_\parallel$ are made the same, and the out-of-plane shear viscosity $\eta_s$ is made different from the out-of-plane normal shear viscosity $\eta_\perp$ and the in-plane viscosity $\eta_\parallel$ ($\eta_\perp = \eta_\parallel = 1E + 07Pa{\cdot}s$, $\eta_s = 1E + 04Pa{\cdot}s$). In this case, a result is obtained that a shear field is generated in the vicinity of a wall surface of a disc, and thus, influence of the out-of-plane shear viscosity that is a low viscosity increases in accordance with the shear field, and the viscosity in the vicinity of the wall surface becomes considerably lower than the viscosity at the central portion, thereby a lubricating layer is automatically generated.

As indicated in Fig. 11(b), in a case of the transversely isotropic material, a large viscosity difference occurs between a portion near the center of the base material (disc) and a portion in the vicinity of the wall surface of the mold of the base material (disc). The "lubricating layer" refers to this area with a low viscosity. Note that "automatically" means not making a change to the boundary condition (No-slip), and not specifying a specific area (the vicinity of the wall surface of the mold or the center).

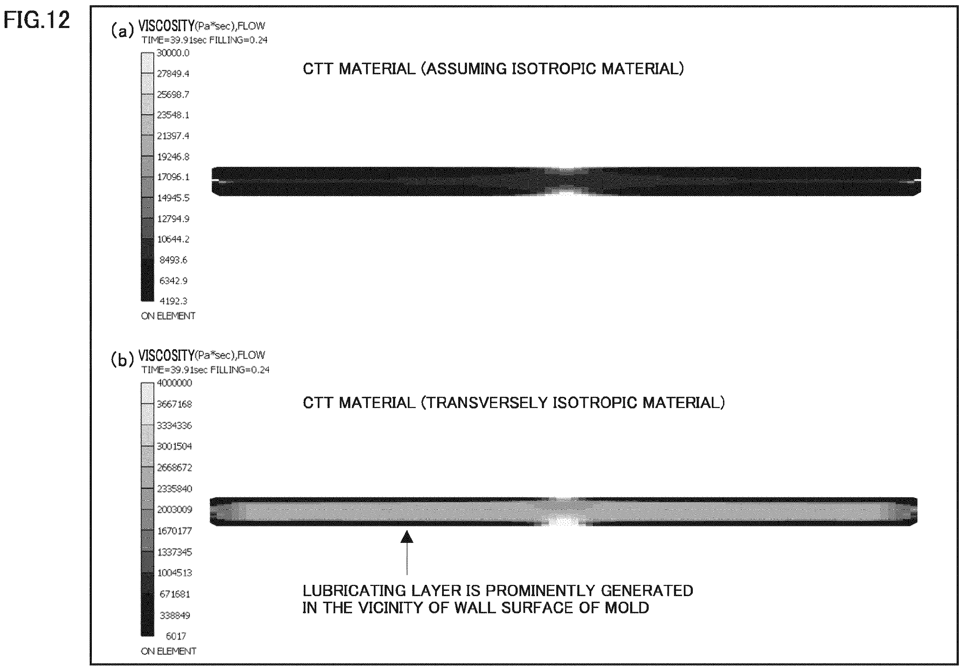

Fig. 12 is a view indicating compression analysis results using the model illustrated in Fig. 10 and is a view indicating an application example (viscosity distribution in a cross-section direction of the material) of the simulation to the CTT material. Fig. 12(a) is a view indicating viscosity distribution in a cross-section direction, obtained assuming that the CTT material is an isotropic material for comparison. Fig. 12(b) is a view indicating viscosity distribution in a cross-section of the CTT material (transversely isotropic material).

As can be seen from comparison of Fig. 12(a) and Fig. 12(b), in the CTT material (transversely isotropic material), a lubricating layer is prominently generated in the vicinity of the wall surface of the mold (that is, a viscosity difference is large between the center and the vicinity of the wall surface of the mold) compared to the assumed isotropic material. As a result, in a case where an actually measured anisotropic viscosity parameter in which the shear rate dependency is taken into account is used as in the CTT material, it can be seen that the lubricating layer prominently appears in an area in the vicinity of the wall surface of the mold upon molding.

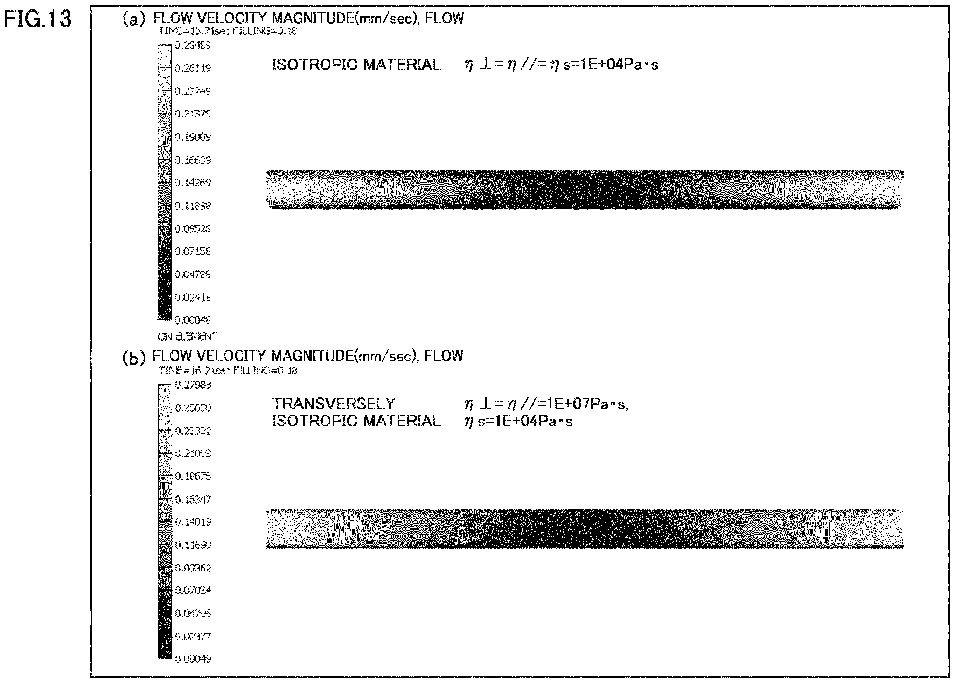

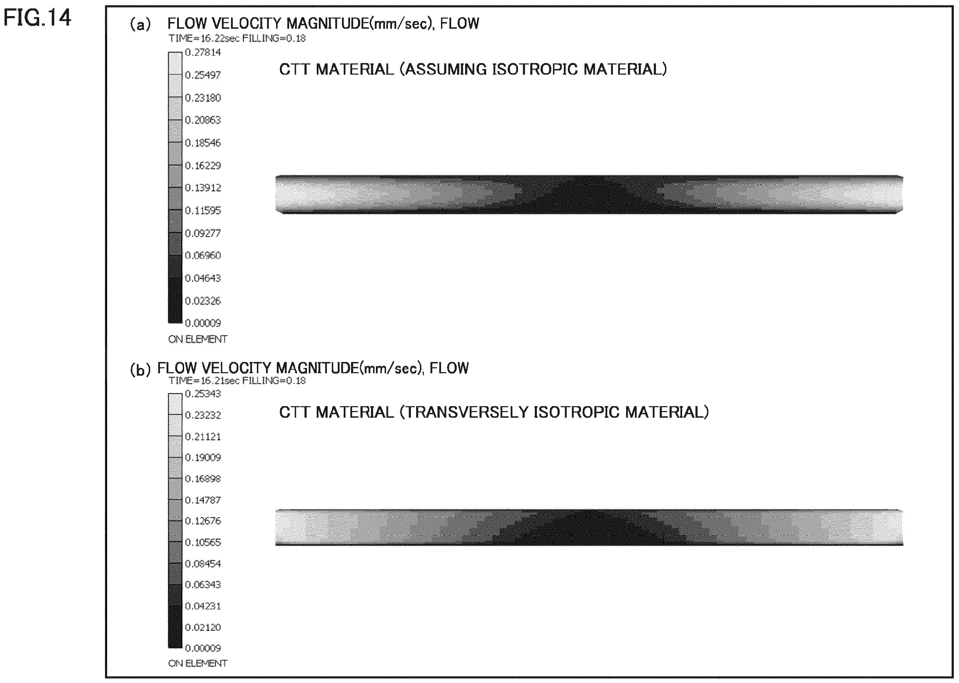

Fig. 13 is a view indicating analysis results of flow velocity distribution corresponding to the viscosity distribution indicated in Fig. 11. Fig. 14 is a view indicating analysis results of flow velocity distribution corresponding to the viscosity distribution indicated in Fig. 12. As can be seen from Fig. 11 to Fig. 14, in the molding analysis method according to the present embodiment, as a viscosity ratio indicating intensity of anisotropy increases, a flow velocity in the vicinity of the wall surface of the mold comes closer to a flow velocity at the central portion of the molder article, and distribution of the flow velocity becomes closer to uniform in a thickness direction of the molded article.

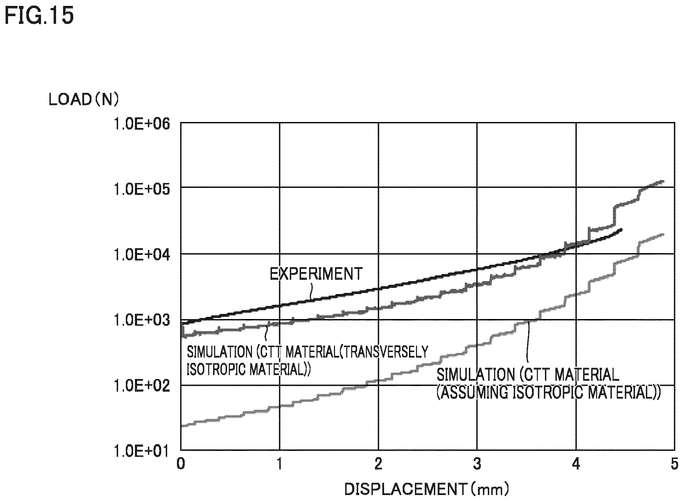

Fig. 15 is a view indicating an experimental result and a simulation result regarding a compression test for the CTT material. It can be seen from Fig. 15 that a value closer to the result of the experiment can be obtained in the simulation result of the CTT material (transversely isotropic material). In the simulation result in a case where an isotropic material is assumed for comparison, a value of load considerably lower than the experimental value is obtained. It can be seen from this that according to the present embodiment, a simulation result with high accuracy can be obtained in molding analysis regarding the CTT material.

Note that in the above-described embodiment, fiber-reinforced plastic is indicated as an example of a target material. However, the composite material that becomes a target in the present embodiment is not limited to fiber-reinforced plastic, and a composite material in which other types of reinforcing materials are added to a resin as a base material may be used. Examples of such reinforcing materials can include inorganic fillers such as cray and talc.

Further, in the above-described embodiment, as a material having anisotropy between the out-of-plane direction and the in-plane direction, a transversely isotropic material is exemplified. However, the material having anisotropy between the out-of-plane direction and the in-plane direction is not limited to the transversely isotropic material and may be, for example, an in-plane isotropic material. The molding analysis method according to the present embodiment can be also applied to the in-plane isotropic material.

While the embodiment and the examples of the present invention have been described above, it should be understood that the embodiments disclosed herein are by way of illustration and example only and are not to be taken by way of limitation. The scope of the present invention is indicated by the claims and is intended to include all changes within the content and the range equivalent to the claims.

REFERENCE SIGNS LIST

10 Intermediate base material; 11 Marking off line; 12 Resin; 14 Fiber; 22 Heating device; 24 Molding device; 25 Mold; 26 Analysis device; 31 Processor; 32 Primary storage device; 33 Secondary storage device; 34 External equipment interface; 35 Input interface; 36 Output interface; 37 Communication interface; 38 Bus; 41 Keyboard; 43 Display; 51 Input unit; 52 Average viscosity calculation unit; 53 Viscosity distribution calculation unit; 54 Storage unit; 55 Output unit; S1 to S3 Step

**Claims**

1. A molding analysis method for performing molding analysis of a plate-like intermediate base material containing a resin and a reinforcing material when the intermediate base material is molded using a mold, the molding analysis method comprising:

   applying a model having anisotropy between an out-of-plane direction and an in-plane direction orthogonal to the out-of-plane direction as a model of the intermediate base material; and
   calculating viscosity distribution in a cross-section direction of a molded article using each viscosity in accordance with a flow field,
   wherein the viscosity distribution indicates that under a boundary condition that there is no slip flow of the intermediate base material on a wall surface of the mold, as a result of a shear field occurring in the vicinity of the wall surface, a low viscosity layer that is more affected by an out-of-plane shear viscosity than a central portion of the intermediate base material is automatically formed in the vicinity of the wall surface, and the intermediate base material in the vicinity of the wall surface functions as a lubricating layer.

2. The molding analysis method according to claim 1, comprising

   making a flow velocity in the vicinity of the wall surface of the mold come closer to a flow velocity at a central portion of a molded article as a viscosity ratio indicating intensity of anisotropy increases, wherein distribution of the flow velocity becomes closer to uniform in a thickness direction of the molded article.

3. The molding analysis method according to claim 1 or 2, comprising:
   calculating an average velocity that is an isotropic velocity by applying a weighting function that depends on a flow field to viscosities in the in-plane direction and the out-of-plane direction of the model.

4. The molding analysis method according to claim 3,
   wherein the weighting function is a function obtained on a basis of orthogonal tensor decomposition of strain rate tensor regarding deformation of the model.

5. The molding analysis method according to any one of claims 1 to 4,

wherein the flow field is out-of-plane compression, in-plane compression, isotropic compression, out-of-plane shear and in-plane shear.

6. The molding analysis method according to any one of claims 1 to 5,

   wherein the viscosity in the in-plane direction of the model is an in-plane viscosity, and
   the viscosity in the out-of-plane direction of the model includes an out-of-plane normal shear viscosity and an out-of-plane shear viscosity.

7. The molding analysis method according to any one of claims 1 to 6,
   wherein the intermediate base material is fiber-reinforced plastic using a fiber as the reinforcing material.

8. A program for causing a computer to execute the molding analysis method according to any one of claims 1 to 7.

9. A computer readable recording medium recording the program according to claim 8.

FIG.1

FIG.2

Continuous Carbon fiber

Polypropylene

Continuous CF/PP Prepreg tape

Chop & laminate

Random sheet

FIG.3

```
                                           ┌─ S1
┌─────────────────────────────────────────────┐
│ MANUFACTURE CONTINUOUS FIBER PREPREG         │
└─────────────────────────────────────────────┘
                     │
                     ▼                     ┌─ S2
┌─────────────────────────────────────────────┐
│         MANUFACTURE CHOPPED TAPE             │
└─────────────────────────────────────────────┘
                     │
                     ▼                     ┌─ S3
┌─────────────────────────────────────────────┐
│    LAMINATE AND COMPRESS CHOPPED TAPE        │
└─────────────────────────────────────────────┘
                     │
                     ▼
           INTERMEDIATE BASE MATERIAL
```

FIG.4

INTERMEDIATE BASE MATERIAL    INFRARED HEATER    COMPRESSION    MOLDED ARTICLE

FIG.5

FIG.6

## FIG.7

## FIG.8

FIG.9

FIG.10

FIG.11

(a) VISCOSITY(Pa*sec),FLOW
TIME=29.71sec FILLING=0.21

11000.00
10833.33
10666.67
10500.00
10333.33
10166.67
10000.00
9833.33
9666.67
9500.00
9333.33
9166.67
9000.00
ON ELEMENT

ISOTROPIC MATERIAL $\eta \perp = \eta // = \eta s = 1E+04Pa \cdot s$

(b) VISCOSITY(Pa*sec),FLOW
TIME=33.62sec FILLING=0.22

9999970
9172468
8344966
7517464
6689962
5862460
5034958
4207456
3379953
2552451
1724949
897447
69945
ON ELEMENT

TRANSVERSELY ISOTROPIC MATERIAL $\eta \perp = \eta // = 1E+07Pa \cdot s,$ $\eta s = 1E+04Pa \cdot s$

AREA WITH LOW VISCOSITY

EP 4 350 567 A1

FIG.12

(a) VISCOSITY(Pa*sec),FLOW
TIME=39.91sec FILLING=0.24

| 30000.0 |
|---|
| 27849.4 |
| 25698.7 |
| 23548.1 |
| 21397.4 |
| 19246.8 |
| 17096.1 |
| 14945.5 |
| 12794.9 |
| 10644.2 |
| 8493.6 |
| 6342.9 |
| 4192.3 |

ON ELEMENT

CTT MATERIAL (ASSUMING ISOTROPIC MATERIAL)

(b) VISCOSITY(Pa*sec),FLOW
TIME=39.91sec FILLING=0.24

| 4000000 |
|---|
| 3667168 |
| 3334336 |
| 3001504 |
| 2668672 |
| 2335840 |
| 2003009 |
| 1670177 |
| 1337345 |
| 1004513 |
| 671681 |
| 338849 |
| 6017 |

ON ELEMENT

CTT MATERIAL (TRANSVERSELY ISOTROPIC MATERIAL)

LUBRICATING LAYER IS PROMINENTLY GENERATED
IN THE VICINITY OF WALL SURFACE OF MOLD

FIG.13

FIG.14

(a) FLOW VELOCITY MAGNITUDE(mm/sec), FLOW
TIME=16.22sec FILLING=0.18
CTT MATERIAL (ASSUMING ISOTROPIC MATERIAL)

0.27814
0.25497
0.23180
0.20863
0.18546
0.16229
0.13912
0.11595
0.09277
0.06960
0.04643
0.02326
0.00009
ON ELEMENT

(b) FLOW VELOCITY MAGNITUDE(mm/sec), FLOW
TIME=16.21sec FILLING=0.18
CTT MATERIAL (TRANSVERSELY ISOTROPIC MATERIAL)

0.25343
0.23232
0.21121
0.19009
0.16998
0.14787
0.12676
0.10565
0.08454
0.06343
0.04231
0.02120
0.00009
ON ELEMENT

24

FIG.15

## INTERNATIONAL SEARCH REPORT

| International application No. |
| --- |
| **PCT/JP2022/022190** |

| A. | CLASSIFICATION OF SUBJECT MATTER |
| --- | --- |

*G06F 30/23*(2020.01)i; *G06F 113/22*(2020.01)n; *G06F 113/26*(2020.01)n
FI:    G06F30/23; G06F113:22; G06F113:26

According to International Patent Classification (IPC) or to both national classification and IPC

| B. | FIELDS SEARCHED |
| --- | --- |

Minimum documentation searched (classification system followed by classification symbols)

G06F30/23; G06F113/22; G06F113/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); IEEE Xplore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 10201918 B1 (PURDUE RESEARCH FOUNDATION) 12 February 2019 (2019-02-12) entire text, all drawings | 1-9 |
| A | JP 2017-226106 A (TORAY ENG CO LTD) 28 December 2017 (2017-12-28) entire text, all drawings | 1-9 |
| A | JP 2019-215204 A (TOYO BOSEKI) 19 December 2019 (2019-12-19) entire text, all drawings | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 August 2022** | **23 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2022/022190**

| Patent document cited in search report | | | Publication date (day/month/year) | Patent family member(s) | Publication date (day/month/year) |
|---|---|---|---|---|---|
| US | 10201918 | B1 | 12 February 2019 | (Family: none) | |
| JP | 2017-226106 | A | 28 December 2017 | US 2017/0363528 A1<br>entire text, all drawings | |
| JP | 2019-215204 | A | 19 December 2019 | (Family: none) | |

Form PCT/ISA/210 (patent family annex) (January 2015)

**REFERENCES CITED IN THE DESCRIPTION**

**Patent documents cited in the description**

- US 20190232535